# EUROPEAN PATENT APPLICATION

(11) **EP 4 768 233 A1**
(43) Date of publication of application: **01.07.2026**
(21) Application number: 25226962.6
(22) Date of filing: 23.12.2025
(51) Int. Cl.: B29C 70/38, B29C 70/54, B32B 38/10

(54) **PEELING A PROTECTIVE FILM FROM A COMPOSITE MATERIAL SHEET**

(30) Priority: 30.12.2024 US 202419005314
(71) Applicant: The Boeing Company, Arlington, VA 22202 (US)
(72) Inventor: Wienhold, Erik Nicholas, Arlington 22202 (US); Smith, Brian James, Arlington 22202 (US); Zmeu, Sandra Louise, Arlington 22202 (US); Brown, Christopher Robert, Arlington 22202 (US); Fritzke, Ricardo Andreas, Arlington 22202 (US); Heng, Sangvavann, Arlington 22202 (US); Johnson, Brice Aaron, Arlington 22202 (US); Zgherea, Lisa C., Arlington 22202 (US)
(74) Representative: Arnold & Siedsma

(57) **Abstract**

Methods of peeling a protective film from the composite material are presented. A second protective film on a second face of the composite material sheet is held against a plurality of gripping points of an end effector. The composite material sheet is positioned at an angle relative to the manufacturing floor using the end effector. A first protective film on a first face of the composite material sheet is gripped by a film removal end effector. The first protective film is peeled away from the first face of the composite material sheet by movement of the film removal end effector.

## Description

### STATEMENT OF U.S. GOVERNMENT INTEREST

This invention was made with Government support under contract number AFRL ManTech FA2394-23-C-B006 awarded by Department of Defense. The government has certain rights in this invention.

### BACKGROUND INFORMATION

### 1. Field:

The present disclosure relates generally to composite manufacturing and more specifically to automated composite manufacturing.

### 2. Background:

Automated material handling of ceramic matrix composite (CMC) fabric based material is made possible by having a top and bottom protective film on the material. Before laying up the ceramic matrix composite (CMC) fabric, the bottom protective film is removed. In an automated process, the removal of the bottom protective film would desirably be part of the automated process. However, controlled automated removal of the films has been undesirably difficult. In prior attempts at automated film removal, the top protective film has begun peeling while the bottom protective film is being removed. However, it is desirable to maintain the top protective film until the ceramic matrix composite (CMC) material has been placed and compacted on a layup tool or forming tool.

Therefore, it would be desirable to have a method and apparatus that takes into account at least some of the issues discussed above, as well as other possible issues.

### SUMMARY

An example of the present disclosure provides a method of peeling a protective film from a composite material sheet. A second protective film on a second face of the composite material sheet is held against a plurality of gripping points of an end effector. The composite material sheet is positioned at an angle relative to the manufacturing floor using the end effector. A first protective film on a first face of the composite material sheet is gripped by a film removal end effector. The first protective film is peeled away from the first face of the composite material sheet by movement of the film removal end effector.

Holding the composite material sheet against the plurality of gripping points may comprise holding a second protective film on a second face of the composite material sheet with a plurality of suction cups of the end effector. Holding the composite material sheet against the plurality of gripping points may comprise applying vacuum through a plurality of suction cups of the end effector. Positioning the composite material sheet at an angle may comprise positioning the composite material sheet at an angle configured to provide gravity assist to surface tension maintaining the second protective film on the second face. Gripping a first protective film on a first face of the composite material sheet by a film removal end effector may comprise gripping the first protective film by a suction cup of the film removal end effector. Peeling the first protective film away from the first face of the composite material sheet by movement of the film removal end effector may comprise moving the film removal end effector away from the first face of the composite material sheet. The method may further comprise locally breaking surface tension between the first protective film and the first face prior to moving the film removal end effector away from the first face of the composite material sheet. Peeling the first protective film away from the first face of the composite material sheet by movement of the film removal end effector may comprise moving the film removal end effector at the angle away from the manufacturing floor. The angle relative to the manufacturing floor may be in the range of 0 degrees to 60 degrees.

An example of the present disclosure provides a method of peeling a protective film from a composite material sheet. The composite material sheet is positioned at an angle relative to a manufacturing floor using an end effector. A first protective film on a first face of the composite material sheet is gripped by a film removal end effector. The first protective film is peeled away from the first face of the composite material sheet by movement of the film removal end effector.

The method may further comprise holding and/or gripping a second protective film on a second face of the composite material sheet against a plurality of gripping points of the end effector. Positioning the composite material sheet at the angle may comprise positioning and/or turning the composite material sheet at the angle configured to provide gravity assist in maintaining the composite material sheet in contact with a second protective film. Gripping the second protective film against the plurality of gripping points of the end effector may comprise holding the second protective film with a plurality of suction cups of the end effector. Gripping the second protective film against the plurality of gripping points of the end effector may comprise applying vacuum through a plurality of suction cups of the end effector. Peeling the first protective film away from the first face of the composite material sheet by movement of the film removal end effector may comprise moving the film removal end effector away from the first face of the composite material sheet. The method may further comprise locally breaking surface tension between the first protective film and the first face prior to moving the film removal end effector away from the first face of the composite material sheet. Peeling the first protective film away from the first face of the composite material sheet by movement of the film removal end effector may comprise moving the film removal end effector at the angle away from the manufacturing floor. The angle relative to the manufacturing floor may be in the range of 0 degrees to 60 degrees.

Yet another example of the present disclosure provides a protective film peeling assembly. The protective film peeling assembly comprises an end effector with a head having a plurality of gripping points, and a film removal end effector with a suction cup directed towards the head of the end effector. The end effector is configured to position the head at an angle relative to a manufacturing floor.

The plurality of gripping points may comprise a plurality of suction cups.

Yet another example of the present disclosure provides a method of peeling a protective film from a composite material sheet comprising turning the composite material sheet to position the composite material sheet at an angle configured to provide gravity assist in maintaining the composite material sheet in contact with a second protective film; and peeling a first protective film away from the composite material sheet by movement of a film removal end effector while the composite material sheet is held at the angle.

The angle may be in the range of 0 degrees to 60 degrees. The method may further comprise holding a second protective film on a second face of the composite material sheet against a plurality of gripping points of an end effector, wherein turning the composite material sheet may comprise moving the end effector while holding the second protective film.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figure 2** is an illustration of a block diagram of a manufacturing environment in accordance with an illustrative example;
**Figure 3** is an illustration of removing a protective film from a composite material in accordance with an illustrative example;
**Figure 4** is an illustration of end effectors for removing a protective film from a composite material in accordance with an illustrative example;
**Figure 5** is a flowchart of a method of peeling a protective film from a composite material sheet in accordance with an illustrative example;
**Figure 6** is a flowchart of a method of peeling a protective film from a composite material sheet in accordance with an illustrative example;
**Figure 7** is a flowchart of a method of peeling a protective film from a composite material sheet in accordance with an illustrative example;
**Figure 8** is an illustration of an aircraft manufacturing and service method in a form of a block diagram in accordance with an illustrative example; and
**Figure 9** is an illustration of an aircraft in a form of a block diagram in which an illustrative example may be implemented.

### DETAILED DESCRIPTION

The illustrative examples recognize and take into account several considerations. The illustrative examples recognize and take into account that positioning of the material is important to successfully perform a bottom film peel. The illustrative examples recognize and take into account that the lower film is being peeled in a vertical orientation, the composite ply tends to come off of the upper film. The illustrative examples recognize and take into account that the ply is being held on both films by surface tension so the ply will often stay attached to the lower film, causing an undesirable or incomplete peel.

The illustrative examples present a dual robot armed system allows the optimum positioning of the material so that gravity can assist the film peel. The illustrative examples present an automated film peeling system. In the illustrative examples, gravity has a greater impact than surface tension in causing the material to stay adhered to the stationary backing film.

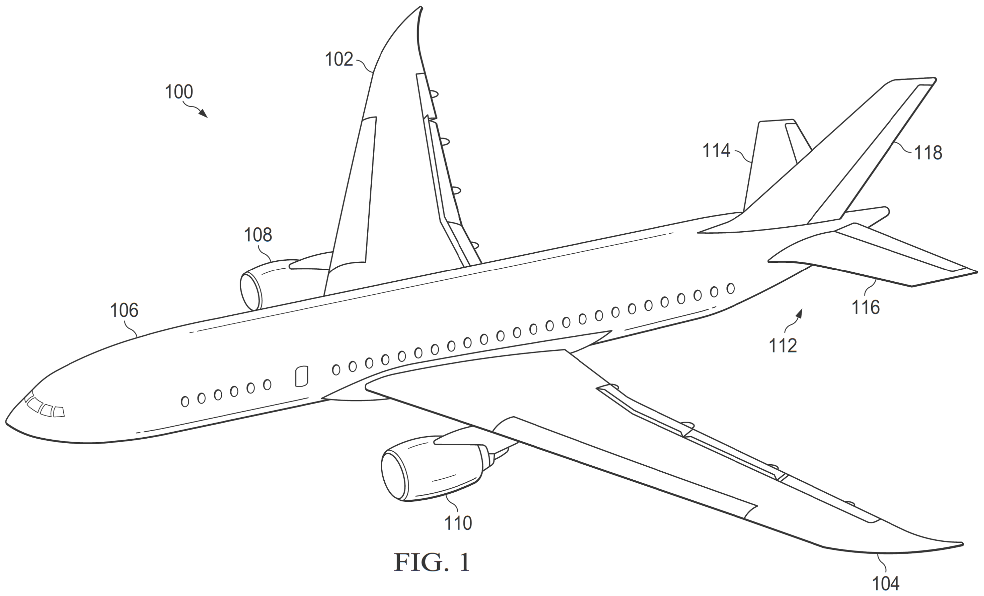

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have composite parts formed using the illustrative examples. A portion of wing **102,** wing **104,** or body **106** can be formed of a composite material laid up following an automated peel of the protective film.

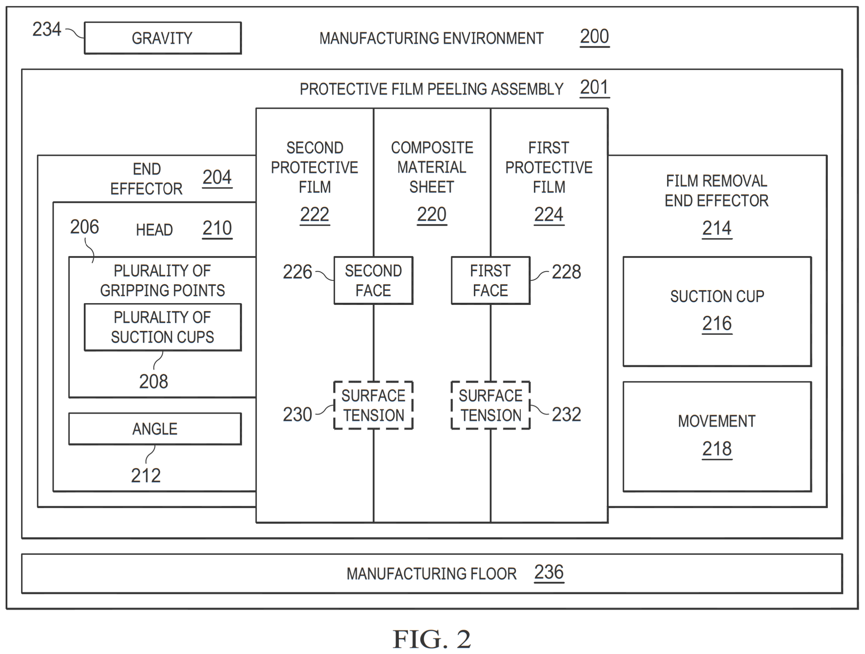

Turning now to **Figure 2****,** an illustration of a block diagram of a manufacturing environment is depicted in accordance with an illustrative example. Manufacturing environment **200** can be an environment in which composite material for a composite part of aircraft **100** is picked and placed.

Protective film peeling assembly **201** is configured to peel a protective film from composite material sheet **220.** Protective films, first protective film **224** and second protective film **222,** are used for handling composite material sheet **220.** Prior to placing first face **228** against a mandrel or a forming tool, first protective film **224** is removed. In some illustrative examples, first protective film **224** can be considered a "back film".

Protective film peeling assembly **201** comprises end effector **204** with head **210** having plurality of gripping points **206** and film removal end effector **214** with suction cup **216** directed towards head **210** of end effector **204.** End effector **204** is configured to position head **210** at angle **212** relative to manufacturing floor **236.**

In some illustrative examples, plurality of gripping points **206** comprise plurality of suction cups **208.** Vacuum through plurality of suction cups **208** can be used to grip second protective film **222.**

End effector **204** holds composite material sheet **220** during peeling of first protective film **224** away from composite material sheet **220.** End effector **204** holds second protective film **222** that is on second face **226** of composite material sheet **220** against plurality of gripping points **206** of end effector **204.** Composite material sheet **220** is positioned at angle **212** relative to manufacturing floor **236** using end effector **204.** Film removal end effector **214** grips first protective film **224** on first face **228** of composite material sheet **220.** Movement **218** of film removal end effector **214** peels first protective film **224** away from first face **228** of composite material sheet **220.**

In some illustrative examples, holding composite material sheet **220** against plurality of gripping points **206** comprises holding second protective film **222** on second face **226** of composite material sheet **220** with plurality of suction cups **208** of end effector **204.** In some illustrative examples, holding composite material sheet **220** against plurality of gripping points **206** comprises applying vacuum through plurality of suction cups **208** of end effector **204.**

Prior to peeling first protective film **224** from composite material sheet **220,** first protective film **224** is maintained against first face **228** of composite material sheet **220** by surface tension **232.** Second protective film **222** is maintained against second face **226** of composite material sheet **220** by surface tension **230.** By holding composite material sheet **220** at angle **212,** gravity **234** aids surface tension **232** in maintaining second protective film **222** against second face **226** of composite material sheet **220.** Composite material sheet **220** is positioned at angle **212** configured to provide gravity **234** assist to surface tension **230** to maintain second protective film **222** on second face **226.** In some illustrative examples, angle **212** relative to manufacturing floor **236** is in the range of 0 degrees to 60 degrees. In some illustrative examples, angle **212** relative to manufacturing floor **236** is in the range of 15 degrees to 60 degrees. In some illustrative examples, angle **212** relative to manufacturing floor **236** is in the range of 30 degrees to 60 degrees. In some illustrative examples, angle **212** relative to manufacturing floor **236** is in the range of 15 degrees to 45 degrees.

In some illustrative examples, peeling first protective film **224** away from first face **228** of composite material sheet **220** by movement of film removal end effector **214** comprises moving film removal end effector **214** away from first face **228** of composite material sheet **220.** In some illustrative examples, peeling first protective film **224** away from first face **228** of composite material sheet **220** comprises moving film removal end effector **214** at an angle away from manufacturing floor **236.** In some illustrative examples, method **500** locally breaks surface tension between first protective film **224** and first face **228** prior to moving film removal end effector **214** away from first face **228** of the composite material sheet **220.**

The peeling of protective films from composite material sheet **220** is automated in manufacturing environment **200.** Automating of peeling of first protective film **224** allows for automated layup of composite materials.

The illustration of manufacturing environment **200** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

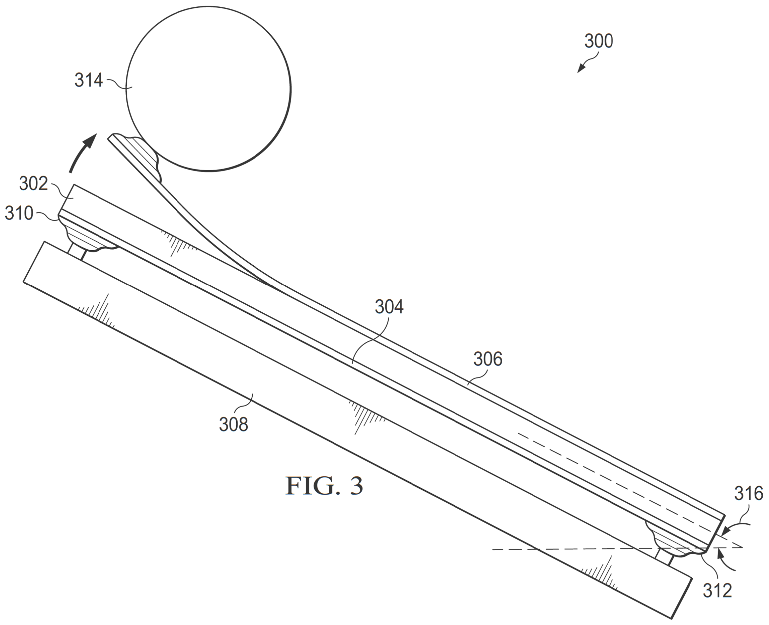

Turning now to **Figure 3****,** an illustration of removing a protective film from a composite material is depicted in accordance with an illustrative example. Composite material sheet **302** with second protective film **304** and first protective film **306** can be a physical implementation of composite material sheet **220** of **Figure 2****.**

In view **300,** composite material sheet **302** is held at angle **316** relative to the manufacturing floor. In view **300,** composite material sheet **302** is neither horizontal nor vertical relative to the manufacturing floor.

End effector **308** comprises head having plurality of gripping points **312.** End effector **308** is configured to position the head at an angle relative to a manufacturing floor. In this illustrative example, end effector **308** is holding composite material sheet **302** at angle **316** relative to the manufacturing floor. Film removal end effector **314** with suction cup is directed towards head of end effector **308.** In this illustrative example, plurality of gripping points **312** comprises plurality of suction cups **310.**

Film removal end effector **314** is depicted during peeling of first protective film **306** from composite material sheet **302.** First protective film **306** on the first face of composite material sheet **302** is gripped by film removal end effector **314.** Plurality of gripping points **312** of end effector **308** hold second protective film **304** that is on the second face of composite material sheet **302.**

End effector **308** has positioned composite material sheet **302** at angle **316** relative to the manufacturing floor. In this illustrative example, positioning composite material sheet **302** at angle **316** comprises positioning composite material sheet **302** at angle **316** configured to provide gravity assist to surface tension maintaining the second protective film **304** on the second face.

In this illustrative example, film removal end effector **314** is peeling first protective film **306** away from the first face of composite material sheet **302** by movement of film removal end effector **314.** In this illustrative example, peeling first protective film **306** away from the first face of composite material sheet **302** comprises moving film removal end effector **314** away from the first face of composite material sheet **302.**

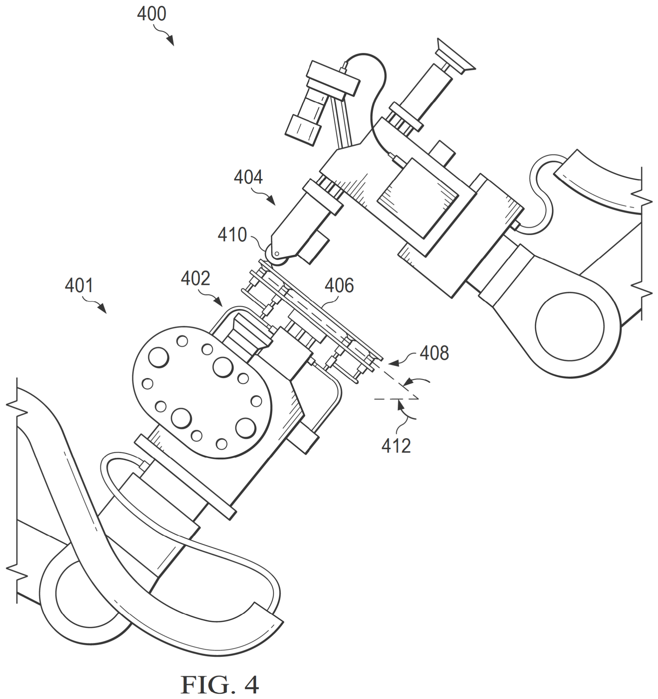

Turning now to **Figure 4****,** an illustration of end effectors for removing a protective film from a composite material is depicted in accordance with an illustrative example. End effector **401** is a physical implementation of end effector **204.** Film removal end effector **404** is a physical implementation of film removal end effector **214** of **Figure 2****.** End effector **401** can be the same as end effector **308** of **Figure 3****.** Film removal end effector **404** can be the same as film removal end effector **314** of **Figure 3****.**

End effector **401** comprises head **402** having plurality of gripping points **408.** End effector **401** is configured to position the head at an angle relative to a manufacturing floor. In this illustrative example, end effector **401** is holding composite material sheet **406** at angle **412** relative to the manufacturing floor. Film removal end effector **404** with suction cup **410** is directed towards head **402** of end effector **401.** In this illustrative example, plurality of gripping points **408** comprises a plurality of suction cups.

Film removal end effector **404** is depicted prior to beginning to peel a protective film from composite material sheet **406.** The first protective film on the first face of composite material sheet **406** is gripped by film removal end effector **404.** Plurality of gripping points **408** of end effector **401** hold the second protective film that is on the second face of composite material sheet **406.**

End effector **401** has positioned composite material sheet **406** at angle **412** relative to the manufacturing floor. In this illustrative example, positioning composite material sheet **406** at angle **412** comprises positioning composite material sheet **406** at angle **412** configured to provide gravity assist to surface tension maintaining the second protective film on the second face.

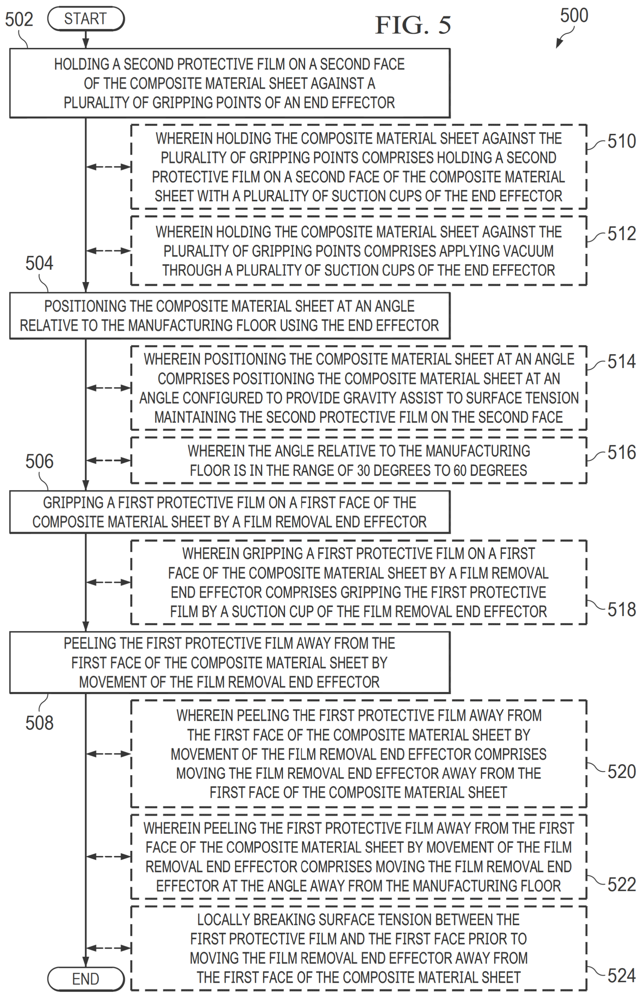

Turning now to **Figure 5** is a flowchart of a method of peeling a protective film from a composite material sheet is depicted in accordance with an illustrative example. Method **500** can be used to form a composite part of aircraft **100** of **Figure 1****.** Method **500** can be performed on composite material sheet **220** of **Figure 2****.** Method **500** can be performed on composite material sheet **302** of **Figure 3****.** Method **500** can be performed on composite material sheet **406** of **Figure 4****.**

Method **500** holds a second protective film on a second face of the composite material sheet against a plurality of gripping points of an end effector (operation **502**). Method **500** positions the composite material sheet at an angle relative to the manufacturing floor using the end effector (operation **504**). Method **500** grips a first protective film on a first face of the composite material sheet by a film removal end effector (operation **506**). Method **500** peels the first protective film away from the first face of the composite material sheet by movement of the film removal end effector (operation **508**). Afterwards, method **500** terminates.

In some illustrative examples, holding the composite material sheet against the plurality of gripping points comprises holding a second protective film on a second face of the composite material sheet with a plurality of suction cups of the end effector (operation **510**). In some illustrative examples, holding the composite material sheet against the plurality of gripping points comprises applying vacuum through a plurality of suction cups of the end effector (operation **512).**

In some illustrative examples, positioning the composite material sheet at an angle comprises positioning the composite material sheet at an angle configured to provide gravity assist to surface tension maintaining the second protective film on the second face (operation **514**). In some illustrative examples, the angle relative to the manufacturing floor is in the range of 30 degrees to 60 degrees (operation **516**). In some illustrative examples, the angle relative to the manufacturing floor is in the range of 15 degrees to 60 degrees. In some illustrative examples, the angle relative to the manufacturing floor is in the range of 30 degrees to 60 degrees. In some illustrative examples, the angle relative to the manufacturing floor is in the range of 15 degrees to 45 degrees.

In some illustrative examples, gripping a first protective film on a first face of the composite material sheet by a film removal end effector comprises gripping the first protective film by a suction cup of the film removal end effector (operation **518**).

In some illustrative examples, peeling the first protective film away from the first face of the composite material sheet by movement of the film removal end effector comprises moving the film removal end effector away from the first face of the composite material sheet (operation **520**). In some illustrative examples, peeling the first protective film away from the first face of the composite material sheet by movement of the film removal end effector comprises moving the film removal end effector at the angle away from the manufacturing floor (operation **522**). In some illustrative examples, method **500** locally breaks surface tension between the first protective film and the first face prior to moving the film removal end effector away from the first face of the composite material sheet (operation **524**).

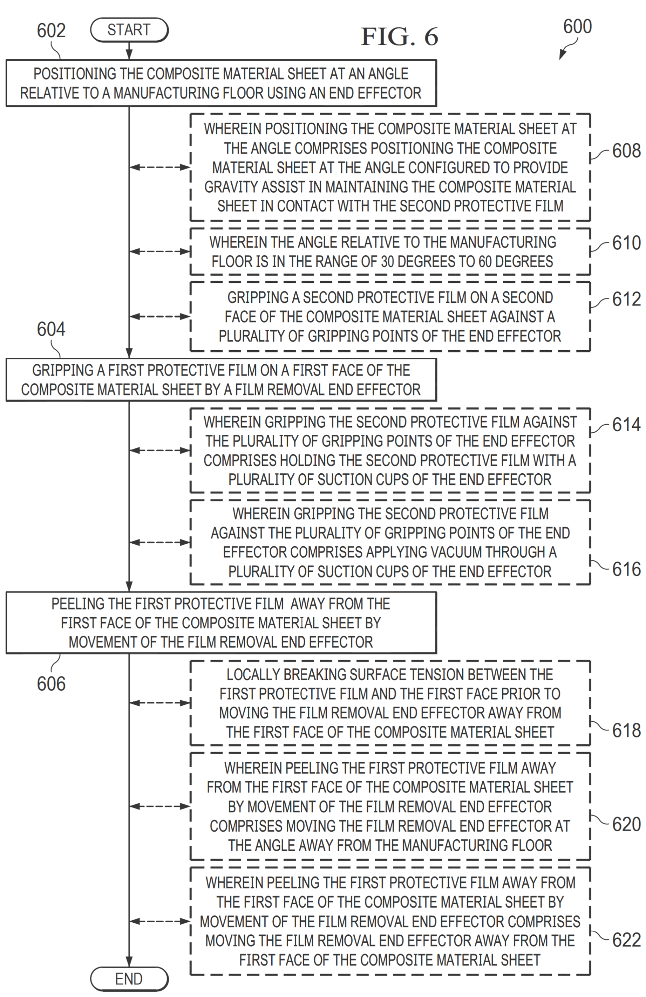

Turning now to **Figure 6****,** a flowchart of a method of peeling a protective film from a composite material sheet is depicted in accordance with an illustrative example. Method **600** can be used to form a composite part of aircraft **100** of **Figure 1****.** Method **600** can be performed on composite material sheet **220** of **Figure 2****.** Method **600** can be performed on composite material sheet **302** of **Figure 3****.** Method **600** can be performed on composite material sheet **406** of **Figure 4****.**

Method **600** positions the composite material sheet at an angle relative to a manufacturing floor using an end effector (operation **602**). Method **600** grips a first protective film on a first face of the composite material sheet by a film removal end effector (operation **604**). Method **600** peels the first protective film away from the first face of the composite material sheet by movement of the film removal end effector (operation **606**). Afterwards, method **600** terminates.

In some illustrative examples, positioning the composite material sheet at the angle comprises positioning the composite material sheet at the angle configured to provide gravity assist in maintaining the composite material sheet in contact with the second protective film (operation **608**). In some illustrative examples, the angle relative to the manufacturing floor is in the range of 30 degrees to 60 degrees (operation **610**). In some illustrative examples, the angle relative to the manufacturing floor is in the range of 15 degrees to 60 degrees. In some illustrative examples, the angle relative to the manufacturing floor is in the range of 30 degrees to 60 degrees. In some illustrative examples, the angle relative to the manufacturing floor is in the range of 15 degrees to 45 degrees.

In some illustrative examples, method **600** grips a second protective film on a second face of the composite material sheet against a plurality of gripping points of the end effector (operation **612**). In some illustrative examples, gripping the second protective film against the plurality of gripping points of the end effector comprises holding the second protective film with a plurality of suction cups of the end effector (operation **614**). In some illustrative examples, gripping the second protective film against the plurality of gripping points of the end effector comprises applying vacuum through a plurality of suction cups of the end effector (operation **616**).

In some illustrative examples, method **600** locally breaks surface tension between the first protective film and the first face prior to moving the film removal end effector away from the first face of the composite material sheet (operation **618**). In some illustrative examples, peeling the first protective film away from the first face of the composite material sheet by movement of the film removal end effector comprises moving the film removal end effector at the angle away from the manufacturing floor (operation **620**). In some illustrative examples, peeling the first protective film away from the first face of the composite material sheet by movement of the film removal end effector comprises moving the film removal end effector away from the first face of the composite material sheet (operation **622**).

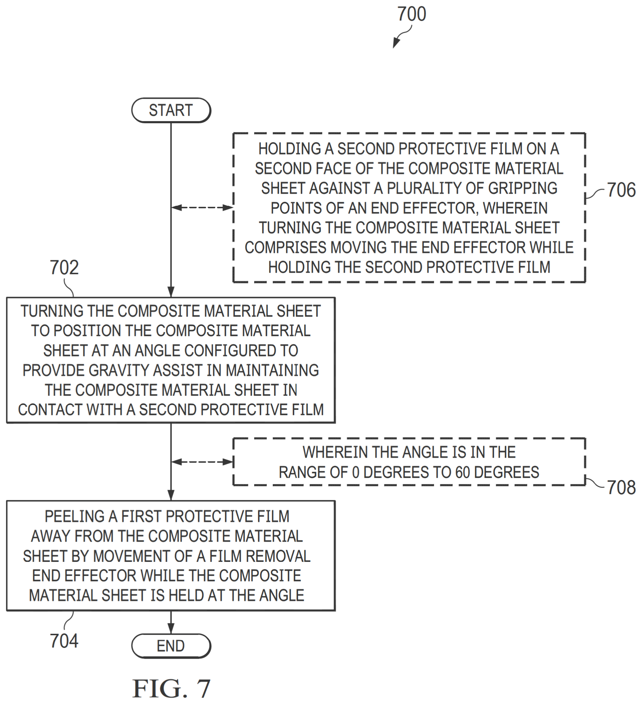

Turning now to **Figure 7****,** a flowchart of a method of peeling a protective film from a composite material sheet is depicted in accordance with an illustrative example. Method **700** can be used to form a composite part of aircraft **100 of** **Figure 1****.** Method **700** can be performed on composite material sheet **220** of **Figure 2****.** Method **700** can be performed on composite material sheet **302** of **Figure 3****.** Method **700** can be performed on composite material sheet **406** of **Figure 4****.**

The composite material sheet is turned to position the composite material sheet at an angle configured to provide gravity assist in maintaining the composite material sheet in contact with a second protective film (operation **702**). A first protective film is peeled away from the composite material sheet by movement of a film removal end effector while the composite material sheet is held at the angle (operation **704).** Afterwards, method **700** terminates.

In some illustrative examples, method **700** holds a second protective film on a second face of the composite material sheet against a plurality of gripping points of an end effector, wherein turning the composite material sheet comprises moving the end effector while holding the second protective film (operation **706**).

In some illustrative examples, the angle is in the range of 0 degrees to 60 degrees (operation **708**). In some illustrative examples, the angle is in the range of 15 degrees to 60 degrees. In some illustrative examples, the angle is in the range of 30 degrees to 60 degrees. In some illustrative examples, the angle is in the range of 15 degrees to 45 degrees.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, any of operation **510** through operation **524** may be optional. Additionally, any of operation **608** through operation **622** may be optional. Also, any of operation **706** through operation **708** may be optional.

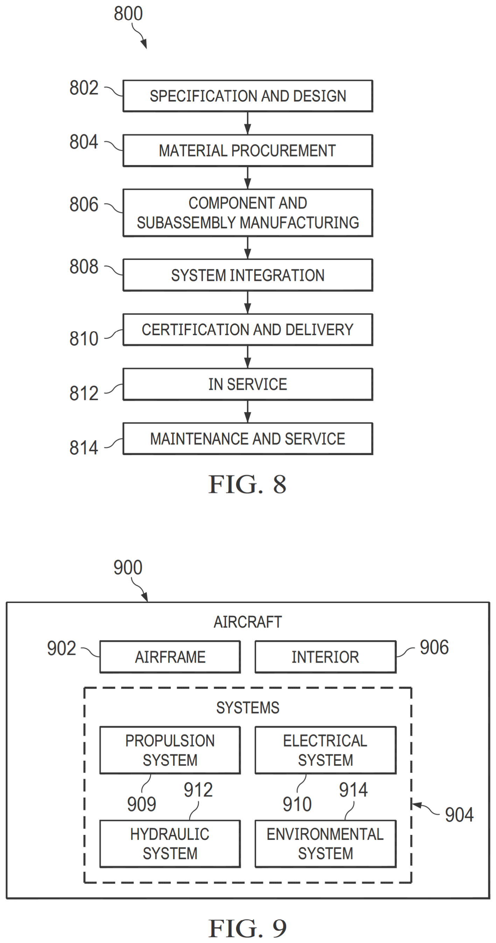

Illustrative examples of the present disclosure may be described in the context of aircraft manufacturing and service method **800** as shown in **Figure 8** and aircraft **900** as shown in **Figure 8****.** Turning first to **Figure 8****,** an illustration of an aircraft manufacturing and service method in a form of a block diagram is depicted in accordance with an illustrative example. During pre-production, aircraft manufacturing and service method **800** may include specification and design **802** of aircraft **900** in **Figure 8** and material procurement **804.**

During production, component and subassembly manufacturing **806** and system integration **808** of aircraft **900** takes place. Thereafter, aircraft **900** may go through certification and delivery **810** in order to be placed in service **812.** While in service **812** by a customer, aircraft **900** is scheduled for routine maintenance and service **814,** which may include modification, reconfiguration, refurbishment, or other maintenance and service.

Each of the processes of aircraft manufacturing and service method **800** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 9****,** an illustration of an aircraft in a form of a block diagram is depicted in which an illustrative example may be implemented. In this example, aircraft **900** is produced by aircraft manufacturing and service method **800** of **Figure 8** and may include airframe **902** with plurality of systems **904** and interior **906.** Examples of systems **904** include one or more of propulsion system **908,** electrical system **910,** hydraulic system **912,** and environmental system **914.** Any number of other systems may be included.

Apparatuses and methods embodied herein may be employed during at least one of the stages of aircraft manufacturing and service method **800.** One or more illustrative examples may be manufactured or used during at least one of component and subassembly manufacturing **806,** system integration **808,** in service **812,** or maintenance and service **814** of **Figure 8****.**

The illustrative examples provide a dual robot armed system that enable positioning of the material so that gravity can assist the film peel. In the illustrative examples, gravity plays a greater role in maintaining the protective film than the surface tension of the material. The gravity causes the composite material to stay adhered to stationary backing film.

The illustrative examples provide a gravity assisted peel. The backing film is removed from both sides of material. A suction cup grips a corner of film and rolls it up. A bottom film is peeled first. The CMC material is held upside down to use gravity to help peel the bottom film.

The illustrative examples utilize a peel end effector mounted to a robot. In the illustrative examples, the suction cup end effector can be oriented such that gravity will hold the ply onto the lower backing film during the peel. In some illustrative examples, there then can be a coordinated move between both robots to consistently peel the lower film without having an undesirable peel.

The illustrative examples position the layup tool so that gravity assists holding the CMC material in place. The illustrative examples retrieve position and orientation of an upper right corner of a ply on a tool based on ply geometry and ply sequence number. The film removal end effector is sent to a safe approach position above the tool. The suction cup is moved to a position for peeling the film, such as the upper right corner of ply geometry. A vacuum is turned on for a suction cup on the film removal end effector. In some illustrative examples, a vacuum sensor shows successful contact. The film removal end effector is moved to separate the protective film (ply backing) from the composite ply and simultaneously clamp ply backing.

After peeling the protective film from the composite ply, the vacuum is turned off for the suction cup on the film removal end effector. The film removal end effector drops the ply backing into a bin.

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

The disclosure includes the following clauses:
1. A method (500) of peeling a protective film from a composite material sheet (220, 302, 406) comprising:
   holding (502) a second protective film (222, 304) on a second face (226) of the composite material sheet (220, 302, 406) against a plurality of gripping points (206, 312, 408) of an end effector (204, 308, 401);
   positioning (504) the composite material sheet (220, 302, 406) at an angle (212, 316, 412) relative to a manufacturing floor (236) using the end effector (204, 308, 401);
   gripping (506) a first protective film (224, 306) on a first face (228) of the composite material sheet (220, 302, 406) by a film removal end effector (214, 314, 404); and
   peeling (508) the first protective film (224, 306) away from the first face (228) of the composite material sheet (220, 302, 406) by movement (218) of the film removal end effector (214, 314, 404).
2. The method (500) of clause 1, wherein (510) holding the composite material sheet (220, 302, 406) against the plurality of gripping points (206, 312, 408) comprises holding a second protective film (222, 304) on a second face (226) of the composite material sheet (220, 302, 406) with a plurality of suction cups (208, 310) of the end effector (204, 308, 401).
3. The method (500) of clause 1 or 2, wherein (512) holding the composite material sheet (220, 302, 406) against the plurality of gripping points (206, 312, 408) comprises applying vacuum through a plurality of suction cups (208, 310) of the end effector (204, 308, 401).
4. The method (500) of any one of the preceding clauses, wherein (514) positioning the composite material sheet (220, 302, 406) at an angle (212, 316, 412) comprises positioning the composite material sheet (220, 302, 406) at an angle (212, 316, 412) configured to provide gravity (234) assist to surface tension (230, 232) maintaining the second protective film (222, 304) on the second face (226).
5. The method (500) of any one of the preceding clauses, wherein (518) gripping a first protective film (224, 306) on a first face (228) of the composite material sheet (220, 302, 406) by a film removal end effector (214, 314, 404) comprises gripping the first protective film (224, 306) by a suction cup (216, 410) of the film removal end effector (214, 314, 404).
6. The method (500) of any one of the preceding clauses, wherein (520) peeling the first protective film (224, 306) away from the first face (228) of the composite material sheet (220, 302, 406) by movement (218) of the film removal end effector (214, 314, 404) comprises moving the film removal end effector (214, 314, 404) away from the first face (228) of the composite material sheet (220, 302, 406).
7. The method (500) of any one of the preceding clauses, further comprising:
   locally (524) breaking surface tension (230, 232) between the first protective film (224, 306) and the first face (228) prior to moving the film removal end effector (214, 314, 404) away from the first face (228) of the composite material sheet (220, 302, 406).
8. The method (500) of any one of the preceding clauses, wherein (522) peeling the first protective film (224, 306) away from the first face (228) of the composite material sheet (220, 302, 406) by movement (218) of the film removal end effector (214, 314, 404) comprises moving the film removal end effector (214, 314, 404) at the angle (212, 316, 412) away from the manufacturing floor (236).
9. The method (500) of any one of the preceding clauses, wherein (516) the angle (212, 316, 412) relative to the manufacturing floor (236) is in the range of 0 degrees to 60 degrees.
10. A method (600) of peeling a protective film (224) from a composite material sheet (220, 302, 406) comprising:
   positioning (602) the composite material sheet (220, 302, 406) at an angle (212, 316, 412) relative to a manufacturing floor (236) using an end effector (204, 308, 401);
   gripping (604) a first protective film (224, 306) on a first face (228) of the composite material sheet (220, 302, 406) by a film removal end effector (214, 314, 404); and
   peeling (606) the first protective film (224, 306) away from the first face (228) of the composite material sheet (220, 302, 406) by movement (218) of the film removal end effector (214, 314, 404).
11. The method (600) of clause 10, further comprising:
   gripping (612) a second protective film (222, 304) on a second face (226) of the composite material sheet (220, 302, 406) against a plurality of gripping points (206, 312, 408) of the end effector (204, 308, 401).
12. The method (600) of clause 11, wherein (608) positioning the composite material sheet (220, 302, 406) at the angle (212, 316, 412) comprises positioning the composite material sheet (220, 302, 406) at the angle (212, 316, 412) configured to provide gravity (234) assist in maintaining the composite material sheet (220, 302, 406) in contact with the second protective film (222, 304).
13. The method (600) of clause 11 or 12, wherein (614) gripping the second protective film (222, 304) against the plurality of gripping points (206, 312, 408) of the end effector (204, 308, 401) comprises holding the second protective film (222, 304) with a plurality of suction cups (208, 310) of the end effector (204, 308, 401).
14. The method (600) of any one of clauses 11-13, wherein (616) gripping the second protective film (222, 304) against the plurality of gripping points (206, 312, 408) of the end effector (204, 308, 401) comprises applying vacuum through a plurality of suction cups (208, 310) of the end effector (204, 308, 401).
15. The method (600) of any one of clauses 10-14, wherein (622) peeling the first protective film (224, 306) away from the first face (228) of the composite material sheet (220, 302, 406) by movement (218) of the film removal end effector (214, 314, 404) comprises moving the film removal end effector (214, 314, 404) away from the first face (228) of the composite material sheet (220, 302, 406).
16. The method (600) of any one of clauses 10-15, further comprising:
   locally (618) breaking surface tension (230, 232) between the first protective film (224, 306) and the first face (228) prior to moving the film removal end effector (214, 314, 404) away from the first face (228) of the composite material sheet (220, 302, 406).
17. The method (600) of any one of clauses 10-16, wherein (620) peeling the first protective film (224, 306) away from the first face (228) of the composite material sheet (220, 302, 406) by movement (218) of the film removal end effector (214, 314, 404) comprises moving the film removal end effector (214, 314, 404) at the angle (212, 316, 412) away from the manufacturing floor (236).
18. The method (600) of any one of clauses 10-17, wherein (610) the angle (212, 316, 412) relative to the manufacturing floor (236) is in the range of 0 degrees to 60 degrees.
19. A protective film peeling assembly (201) comprising:
   an end effector (204, 308, 401) with a head (210, 402) having a plurality of gripping points (206, 312, 408), the end effector (204, 308, 401) configured to position the head (210, 402) at an angle (212, 316, 412) relative to a manufacturing floor (236); and
   a film removal end effector (214, 314, 404) with a suction cup (216, 410) directed towards the head (210, 402) of the end effector (204, 308, 401).
20. The protective film peeling assembly (201) of clause 19, wherein the plurality of gripping points (206, 312, 408) comprise a plurality of suction cups (208, 310).
21. A method (700) of peeling a protective film from a composite material sheet (220, 302, 406) comprising:
   turning (702) the composite material sheet (220, 302, 406) to position the composite material sheet (220, 302, 406) at an angle (212, 316, 412) configured to provide gravity (234) assist in maintaining the composite material sheet (220, 302, 406) in contact with a second protective film (222, 304); and
   peeling (704) a first protective film (224, 306) away from the composite material sheet (220, 302, 406) by movement (218) of a film removal end effector (214, 314, 404) while the composite material sheet (220, 302, 406) is held at the angle (212, 316, 412).
22. The method (700) of clause 21, wherein (708) the angle (212, 316, 412) is in the range of 0 degrees to 60 degrees.
23. The method (700) of clause 21 or 22, further comprising:
   holding (706) a second protective film (222, 304) on a second face (226) of the composite material sheet (220, 302, 406) against a plurality of gripping points (206, 312, 408) of an end effector (204, 308, 401), wherein turning the composite material sheet (220, 302, 406) comprises moving the end effector (204, 308, 401) while holding the second protective film (222, 304).

## Claims

1. A method (600) of peeling a protective film (224) from a composite material sheet (220, 302, 406) comprising:
positioning (602) the composite material sheet (220, 302, 406) at an angle (212, 316, 412) relative to a manufacturing floor (236) using an end effector (204, 308, 401);
gripping (604) a first protective film (224, 306) on a first face (228) of the composite material sheet (220, 302, 406) by a film removal end effector (214, 314, 404); and
peeling (606) the first protective film (224, 306) away from the first face (228) of the composite material sheet (220, 302, 406) by movement (218) of the film removal end effector (214, 314, 404).

2. The method (600) of claim 1, further comprising:
holding (502) and/or gripping (612) a second protective film (222, 304) on a second face (226) of the composite material sheet (220, 302, 406) against a plurality of gripping points (206, 312, 408) of the end effector (204, 308, 401).

3. The method (600) of claim 2, wherein (608) positioning the composite material sheet (220, 302, 406) at the angle (212, 316, 412) comprises positioning the composite material sheet (220, 302, 406) at the angle (212, 316, 412) configured to provide gravity (234) assist in maintaining the composite material sheet (220, 302, 406) in contact with the second protective film (222, 304).

4. The method (600) of claim 2 or 3, wherein (614) gripping the second protective film (222, 304) against the plurality of gripping points (206, 312, 408) of the end effector (204, 308, 401) comprises holding the second protective film (222, 304) with a plurality of suction cups (208, 310) of the end effector (204, 308, 401).

5. The method (600) of any one of claims 2-4, wherein (616) gripping the second protective film (222, 304) against the plurality of gripping points (206, 312, 408) of the end effector (204, 308, 401) comprises applying vacuum through a plurality of suction cups (208, 310) of the end effector (204, 308, 401).

6. The method (600) of any one of claims 1-5, wherein (622) peeling the first protective film (224, 306) away from the first face (228) of the composite material sheet (220, 302, 406) by movement (218) of the film removal end effector (214, 314, 404) comprises moving the film removal end effector (214, 314, 404) away from the first face (228) of the composite material sheet (220, 302, 406) .

7. The method (600) of any one of claims 1-6, further comprising:
locally (618) breaking surface tension (230, 232) between the first protective film (224, 306) and the first face (228) prior to moving the film removal end effector (214, 314, 404) away from the first face (228) of the composite material sheet (220, 302, 406).

8. The method (600) of any one of claims 1-7, wherein (620) peeling the first protective film (224, 306) away from the first face (228) of the composite material sheet (220, 302, 406) by movement (218) of the film removal end effector (214, 314, 404) comprises moving the film removal end effector (214, 314, 404) at the angle (212, 316, 412) away from the manufacturing floor (236).

9. The method (600) of any one of claims 1-8, wherein (610) the angle (212, 316, 412) relative to the manufacturing floor (236) is in the range of 0 degrees to 60 degrees.

10. The method (500) of any one of the preceding claims, wherein (518) gripping the first protective film (224, 306) on the first face (228) of the composite material sheet (220, 302, 406) by the film removal end effector (214, 314, 404) comprises gripping the first protective film (224, 306) by a suction cup (216, 410) of the film removal end effector (214, 314, 404).

11. A protective film peeling assembly (201) comprising:
an end effector (204, 308, 401) with a head (210, 402) having a plurality of gripping points (206, 312, 408), the end effector (204, 308, 401) configured to position the head (210, 402) at an angle (212, 316, 412) relative to a manufacturing floor (236); and
a film removal end effector (214, 314, 404) with a suction cup (216, 410) directed towards the head (210, 402) of the end effector (204, 308, 401).

12. The protective film peeling assembly (201) of claim 11, wherein the plurality of gripping points (206, 312, 408) comprise a plurality of suction cups (208, 310).

13. A method (700) of peeling a protective film from a composite material sheet (220, 302, 406) comprising:
turning (702) the composite material sheet (220, 302, 406) to position the composite material sheet (220, 302, 406) at an angle (212, 316, 412) configured to provide gravity (234) assist in maintaining the composite material sheet (220, 302, 406) in contact with a second protective film (222, 304); and
peeling (704) a first protective film (224, 306) away from the composite material sheet (220, 302, 406) by movement (218) of a film removal end effector (214, 314, 404) while the composite material sheet (220, 302, 406) is held at the angle (212, 316, 412).

14. The method (700) of claim 13, wherein (708) the angle (212, 316, 412) is in the range of 0 degrees to 60 degrees.

15. The method (700) of claim 13 or 14, further comprising:
holding (706) a second protective film (222, 304) on a second face (226) of the composite material sheet (220, 302, 406) against a plurality of gripping points (206, 312, 408) of an end effector (204, 308, 401), wherein turning the composite material sheet (220, 302, 406) comprises moving the end effector (204, 308, 401) while holding the second protective film (222, 304).
